# EUROPEAN PATENT APPLICATION

(11) **EP 4 813 207 A1**
(43) Date of publication of application: **30.09.2026**
(21) Application number: 25169477.4
(22) Date of filing: 09.04.2025
(51) Int. Cl.: A01L 3/00, A01K 13/00, A01L 5/00, A01L 7/00

(54) **SHOE ADJUSTMENT DEVICE AND SHOE**

(30) Priority: 26.03.2025 US 202519090996
(71) Applicant: Equine Fusion AS, 4031 Stavanger (NO)
(72) Inventor: Revheim, Sven Erik, 4022 STAVANGER (NO)
(74) Representative: Håmsø Patentbyrå AS

(57) **Abstract**

The invention relates to an adjustment device (3) for a shoe (1) for a hoof (5), the adjustment device (3) comprising a plate (30) having a plate upper end (31) and a plate lower end (32), wherein the plate upper end (31) comprises a plurality (35) of pin-receiving holes (351) for receiving complementary pins (40) of the shoe (1), the pin-receiving holes (351) of the plurality (35) being horizontally spaced apart. The invention further relates to a shoe (1) for a hoof (5) and an adjustable shoe (50) for a hoof (5).

## Description

### FIELD OF THE INVENTION

The present invention relates to a shoe for a hoof and an adjustment device for a shoe for a hoof. The invention further relates to an adjustable shoe for a hoof.

### BACKGROUND OF THE INVENTION

Metal shoes that are nailed into the hoof are the most commonly used horse hoof protection in the field today. Such metal shoes have been used for centuries. Several years ago new developments were launched into the market. Hoof boots that are not nailed to the hoof but taken on and off, as desired, have now been a hoof-protection alternative for many years and are taking an ever-increasing market share from the metal shoe. This is also stimulated by an increasing knowledge sharing about and stronger focus on the well-being of the horse.

Another group of shoes that came into the market during these years are the so-called "glue-on" alternatives, which basically are different variations of lower model plastic shoes that are glued on the hoof capsule, which are supposed to last for some weeks. An example of a patent disclosing such shoe is US 4155406 A.

Science has been describing the disadvantages with permanent mounting horse shoes onto the hoof, in particular when this happens for a longer time, i.e. several months. Several solutions to solve this problem have been proposed. Some have tried to solve this problem by chemically locking the shoe to the hoof, but this has the problem of the shoe being locked to the hoof for long time periods (even more than a month).

The current applicant has been active developing horse shoes for many years. Over the years they developed different variations of Velcro/tightening band hoof boots to put on and off as desired by the horse owner. Examples of patents disclosing these shoes are EP 2618654 B1, EP 2257153 A1 and EP 2774480 A1.

Although several hoof boots are currently on the market, there is still room for improvement. Specifically there is still a need for shoes for hoofs that may be better fitted to the individual hoof.

### SUMMARY OF THE INVENTION

The invention has for its object to remedy or to reduce at least one of the drawbacks of the prior art, or at least provide a useful alternative to prior art.

The object is achieved through features, which are specified in the description below and in the claims that follow.

The invention is defined by the independent patent claims. The dependent claims define advantageous embodiments of the invention.

In a first aspect the invention relates to an adjustment device for a shoe for a hoof, the adjustment device comprising a plate having a plate upper end and a plate lower end. The plate upper end comprises a plurality of at least three pin-receiving holes for receiving complementary pins of the shoe, the pin-receiving holes of the plurality of pin-receiving holes being horizontally spaced apart from each other.

The adjustment device may be used together with a corresponding shoe for a hoof to form an adjustable shoe for a hoof. Pins attached to a sidewall front section of the shoe can be inserted into holes of the plurality of pin-receiving holes. The width of the sidewall front section of the shoe may be adjusted to fit the hoof of the animal. The adjustable width is typically provided by a vertical slit on the sidewall front section. The holes of the plurality of pin-receiving holes are horizontally spaced apart from each other, so depending on which holes are used, the sidewall front section may be set to be wide or narrow, to better fit the individual hoof.

In order to facilitate understanding of the invention one or more expressions are further defined hereinafter.

Wherever the word "shoe" is used, this must be interpreted as including boots as well.

Wherever the wording "hoof" is used, this must be interpreted as a hoof or clove-hoof, such as hoof of a horse, a pony, a mule, a donkey, a cow, and the like.

Wherever the wording "animal" is used, this must be interpreted as all hoofed and cloven-hoofed animals, including horses, ponies, mules, donkeys, and the like. The focus on horses through the application does not exclude the applicability to other animals.

In an embodiment of the invention, the plate upper end may comprise a further plurality of pin-receiving holes for receiving complementary pins of the shoe, the pin-receiving holes of the plurality of pin-receiving holes being horizontally spaced apart, and wherein the further plurality of pin-receiving holes is vertically spaced apart from the plurality of pin-receiving holes.

Using a pair of two pins of the shoe with corresponding pin-receiving holes, vertically spaced apart, may strengthen the attachment between the shoe and the adjustment device, and may provide a firmer fit of the shoe on the hoof. The extra set of pins and pin-receiving holes may reduce the chance of the plate coming off the shoe when the animal is wearing the shoe.

The further plurality of pin-receiving holes may comprise two pin-receiving holes, or at least three pin-receiving holes.

The plate lower end may be configured to be fastened to the shoe in operational use.

It may be more important to have an adjustable width on an upper end of the sidewall front section, than on a lower end of the sidewall front section (the lower end being close to the sole of the shoe). Therefore, the plate lower end may be fastened to the shoe at the lower end of the sidewall front section which may strengthen the attachment between the shoe and the plate, without compromising the adjustability of the width on the upper end of the sidewall front section.

In an embodiment of the invention the plate lower end may comprise a fastener-receiving hole for receiving complementary fastening means of the shoe.

The fastener-receiving hole and the complementary fastening means of the shoe may provide a simple and strong attachment of the plate to the shoe. The complementary fastening means may for example be a screw or a pin. The complementary fastening means may be releasably attached such that the adjustment device may be removed from the shoe.

The plate may comprise rows of pin-receiving holes, the rows being distributed vertically between the plate upper end and the plate lower end, and the pin-receiving holes of each row being horizontally spaced apart.

Pins attached to the sidewall front section of the shoe can be inserted into holes of the rows of pin-receiving holes of the plate, such that the plate is releasably attached to the sidewall front section of the shoe.

In a second aspect the invention relates to a shoe for a hoof. The shoe comprises a sole, a sidewall around the perimeter of the sole protruding upwards from a first side of the sole, the sidewall having a sidewall front section and an opposing sidewall rear section. The shoe further comprises a vertical slit extending from an upper end of the sidewall front section towards a lower end of the front section. The shoe further comprises two pin-receiving holes on the upper end of the sidewall front section, wherein the two pin-receiving holes are positioned on each side of the vertical slit.

The effects of the features of the shoe for a hoof in accordance with the invention are as follows. First of all, the shoe fits the hoof of an animal and protects the hoof when in use. The sole, which is typically made of an elastic material, provides a more comfortable surface for the hoof, by dampening the forces of the legs of the animal and by preventing objects on the ground from hurting the foot when the animal is standing on the ground. The sidewall around the perimeter of the sole protruding upwards from a first side of the sole fits around the hoof of the animal, the first side of the sole being the side facing towards the hoof when the animal is wearing the shoe.

Secondly, the slit on the sidewall front section makes it easy to mount and dismount the shoe on the hoof. The sidewall is typically made of an elastic material, and is typically made of the same material as the sole. The slit divides the sidewall front section in two parts, and these two parts may easily be pulled away from each other, to create a larger opening for inserting the hoof into the shoe.

Furthermore, the slit provides flexibility of the fit of the sidewall around the hoof, compared to a continuous sidewall surrounding the hoof. The flexibility of the sidewall front section is due to the slit dividing the sidewall front section in two parts. A hoof may be asymmetrical on the front section, by for example being larger on the left side than the right side, or protruding more outwards on the left side than the right side, or opposite. A sidewall front section divided in to parts would better accommodate an asymmetrical hoof.

Furthermore, the two pin-receiving holes on each side of the slit may be used together with a corresponding adjustment device, as explained above. When in use, the hoof is placed on the first surface of the sole, with the sidewall surrounding it. The sidewall front section, being flexible, will fit nicely onto the front of the hoof, even if the hoof is not symmetrical. The sidewall front section will also accommodate different sizes of hoofs. The adjustment device may then be placed on top of the sidewall front section such that the two pin-receiving holes align with one hole each of the plurality of pin-receiving holes of the adjustment device. Two pins may then be inserted into the pair of pin-receiving holes such that the width and the shape of the sidewall front section is set. This may provide a snug fit of the shoe onto the hoof, and reduce the chance of the shoe falling off the hoof when in use.

The vertical slit may be wider at the upper end of the sidewall front section than the lower end of the sidewall front section. The vertical slit may then be in the form of a "V", such that even at the narrowest width of the sidewall front section, the two parts on each side of the slit do not overlap.

In an embodiment of the invention, the shoe may comprise two further pin-receiving holes on the upper end of the sidewall front section, the two further pin-receiving holes being positioned on each side of the vertical slit, vertically spaced apart from the two pin-receiving holes.

The two further pin-receiving holes may be aligned with a corresponding further plurality of pin-receiving holes on the adjustment device. Using a pair of two pins inserted into corresponding pin-receiving holes of the shoe and of the adjustment device, may strengthen the attachment between the adjustment device and the shoe and may provide a firmer fit of the shoe on the hoof. This may reduce the chance of the adjustment device coming off the shoe when the animal is wearing the shoe.

In an embodiment of the invention, the lower end of the sidewall front section may comprise a fastener-receiving hole for receiving a fastening means, the fastening means being configured for engaging a fastener-receiving hole of an adjustment device.

The fastening means may engage both the fastener-receiving hole of the shoe, and a fastener-receiving hole of an adjustment device, which may lead to a simple and strong attachment of the adjustment device to the shoe.

In an embodiment of the invention, the shoe may comprise two columns of pin-receiving holes, the columns being horizontally spaced apart, and positioned on each side of the vertical slit, and the pin-receiving holes of each column is vertically spaced apart along the vertical slit.

By inserting pins through the columns of pin-receiving holes and through corresponding pin-receiving holes of an adjustment device, the adjustment device may be releasably attached to the shoe.

The sidewall front section may be inwardly inclined towards the opposing sidewall rear section. The front section of a hoof is typically a tilted backward and may therefore be suitable for being received in the inwardly inclined sidewall front section of the shoe.

In a third aspect the invention relates to an adjustable shoe for a hoof, the adjustable shoe comprising
an adjustment device for a shoe for a hoof, the adjustment device comprising a plate having a plate upper end and a plate lower end, wherein the plate upper end comprises a plurality of pin-receiving holes for receiving complementary pins of the shoe, the pin-receiving holes of the plurality of pin-receiving holes being horizontally spaced apart, and a shoe for a hoof, the shoe comprising a sole, a sidewall around the perimeter of the sole protruding upwards from a first side of the sole, the sidewall having a sidewall front section and an opposing sidewall rear section, and a vertical slit extending from an upper end of the sidewall front section towards a lower end of the front section, and two pin-receiving holes on the upper end of the sidewall front section, wherein the two pin-receiving holes are positioned on each side of the vertical slit.

The plate is releasably attached to the sidewall front section of the shoe such that the two pin-receiving holes of the shoe align with the plurality of pin-receiving holes of the plate, and the adjustable shoe comprises two pins provided within the two pin-receiving holes of the shoe, and within two of the pin-receiving holes of the plurality of pin-receiving holes of the plate.

The adjustment device may be an adjustment device according to the first aspect of the invention. The shoe may be a shoe for a hoof according to the second aspect of the invention.

The plurality of pin-receiving holes may comprise at least three pin-receiving holes, the at least three pin-receiving holes being horizontally spaced apart from each other.

The effect of the features of the shoe and the adjustment device of the adjustable shoe are described above in relation to the first and second aspects of the invention.

To summarise, the sole and sidewall of the shoe provides protection for the hoof. The flexibility of the sidewall due to the vertical slit on the sidewall front section makes it easier to mount and dismount the shoe. A snug fit of the shoe onto different sized hoofs and hoofs with asymmetries is also a result of the flexibility of the sidewall front section and the vertical slit. The two pins provided within the two pin-receiving holes of the shoe, and within two of the pin-receiving holes of the plurality of pin-receiving holes of the plate lock the shape of the sidewall front section, which reduces the risk of the shoe coming off the hoof in use.

The two pairs of pin-receiving holes on the shoe and the adjustment device together with the two pins inserted through both pair of pin-receiving holes, result in a simple but strong attachment between the shoe and adjustment device. The pin-receiving holes may be designed such that the pins fit tightly within the holes, so they do not easily come out. This attachment may be stronger and more durable than classic attachment means such as hook-and-loop fastener which may weaken over time due to dust and debris attaching to the hook-and-loop surfaces.

In an embodiment of the invention
- the plate may comprise rows of pin-receiving holes, the rows being distributed vertically between the plate upper end and the plate lower end, and the pin-receiving holes of each row being horizontally spaced apart; and
- the shoe may comprise two columns of pin-receiving holes, the columns being horizontally spaced apart, and positioned on each side of the vertical slit, and the pin-receiving holes of each column being vertically spaced apart along the vertical slit,
- the adjustable shoe may comprise pins provided within the pin-receiving holes of the columns, and within corresponding pin-receiving holes of the rows, such that the plate is releasably attached to the sidewall front section of the shoe.

In a fourth aspect, the invention relates to an adjustable shoe for a hoof. The adjustable shoe comprises:
An adjustment device for a shoe for a hoof. The adjustment device comprises a plate having a plate upper end and a plate lower end, wherein the plate upper end comprises a plurality of pin-receiving holes for receiving complementary pins of the shoe, the pin-receiving holes of the plurality of pin-receiving holes being horizontally spaced apart.

The adjustable shoe further comprises a shoe for a hoof comprising a sole, a sidewall around the perimeter of the sole protruding upwards from a first side of the sole, the sidewall having a sidewall front section and an opposing sidewall rear section, and a vertical slit extending from an upper end of the sidewall front section towards a lower end of the front section, and two pin-receiving holes on the upper end of the sidewall front section, wherein the two pin-receiving holes are positioned on each side of the vertical slit. The plate lower end is fastened to the lower end of the sidewall front section of the shoe, such that the two pin-receiving holes of the shoe align with the plurality of pin-receiving holes of the plate, and the adjustable shoe comprises two pins provided within the two pin-receiving holes of the shoe, and within two of the pin-receiving holes of the plurality of pin-receiving holes of the plate.

The adjustment device may be an adjustment device according to the first aspect of the invention. The shoe may be a shoe for a hoof according to the second aspect of the invention.

The effect of the features of the adjustable shoe are described above in relation to the third aspects of the invention.

The plurality of pin-receiving holes may comprise at least three holes, the at least three pin-receiving holes being horizontally spaced apart from each other.

In addition, the adjustable shoe according to the fourth aspect of the invention comprises a further attachment point between the plate lower end and the lower end of the sidewall front section.

It may be more important to have an adjustable width on an upper end of the sidewall front section, than on a lower end of the sidewall front section (the lower end being close to the sole of the shoe). Therefore, the plate lower end is fastened to the shoe at the lower end of the sidewall front section which may strengthen the attachment between the shoe and the plate, without compromising the adjustability of the width on the upper end of the sidewall front section.

In an embodiment of the invention, the plate upper end may comprise a further plurality of pin-receiving holes, the pin-receiving holes of the plurality of pin-receiving holes being horizontally spaced apart, and wherein the further plurality of pin-receiving holes is vertically spaced apart from the plurality of pin-receiving holes. In this embodiment of the invention the shoe may comprise two further pin-receiving holes on the upper end of the sidewall front section, the two further pin-receiving holes being positioned on each side of the vertical slit, vertically spaced apart from the two pin-receiving holes. The adjustable shoe further may comprise two further pins provided within the two further pin-receiving holes of the shoe, and within two of the pin-receiving holes of the further plurality of pin-receiving holes of the plate.

Using a pair of two pins inserted into corresponding pin-receiving holes of the shoe and of the adjustment device, may strengthen the attachment between the adjustment device and the shoe and may provide a firmer fit of the shoe on the hoof. This may reduce the chance of the adjustment device coming off the shoe when the animal is wearing the shoe.

In an embodiment of the invention, the plate lower end may be fastened to the lower end of the sidewall front section by being integrated with the lower end of the sidewall front section.

The plate lower end being integrated with the lower end of the sidewall front section may provide a strong attachment between the adjustment device and the shoe.

In an embodiment of the invention, the plate lower end may comprise a fastener-receiving hole, and the lower end of the sidewall front section of the shoe may comprise a fastener-receiving hole. The adjustable shoe may further comprise a fastener provided within both the fastener-receiving hole of the plate and the fastener-receiving hole of the shoe for fastening the lower end of the plate to the lower end of the sidewall front section of the shoe.

The fastening means provided within both fastener-receiving holes may lead to a simple and strong attachment of the adjustment device to the shoe.

In an embodiment of the invention the shoe may further comprise a pastern strap in connection with the sidewall rear section of the shoe. The pastern strap may be directly coupled with the sidewall rear section by for example being threaded through openings in the sidewall rear section. Alternatively, the pastern strap may be coupled with a heel portion of the shoe by for example being threaded through openings in the heel portion, the heel portion being attached to the sidewall rear section.

The pastern strap may be fastened around the pastern of a leg of an animal, providing a further means of attachment of the adjustable shoe on the foot of the animal. Thim may reduce the likelihood of the shoe coming off during use.

### BRIEF INTRODUCTION OF THE DRAWINGS

In the following is described examples of preferred embodiments illustrated in the accompanying drawings, wherein:
- Fig. 1: shows an example of a shoe for a hoof in accordance with the invention;
- Fig. 2: shows an example of an adjustment device for a shoe for a hoof in accordance with the invention;
- Fig. 3: shows an example of an adjustable shoe for a hoof on a foot in accordance with the invention, wherein the front of the shoe is shown;
- Fig. 4: shows the back of the adjustable shoe of Fig. 3;
- Fig. 5: shows the front of the adjustable shoe of Fig. 3, without the foot, wherein the shoe is in the widest position;
- Fig. 6: shows the front of the adjustable shoe of Fig. 3, without the foot, wherein the shoe is in the narrowest position; and
- Fig. 7: shows the front of the adjustable shoe of Fig. 3, wherein the shoe is in an asymmetrical position.

Any positional indications refer to the position shown in the figures. Through the description and the claims, position indications such as "upper" and "lower", "top" and "bottom", or "horizontal" and "vertical", etc., denotes the position the adjustable shoe and other components have in the subsequent figures, which is also a natural or practical functional position of the shoe.

In the figures, same or corresponding elements are indicated by same reference numerals. For clarity reasons, some elements may in some of the figures be without reference numerals.

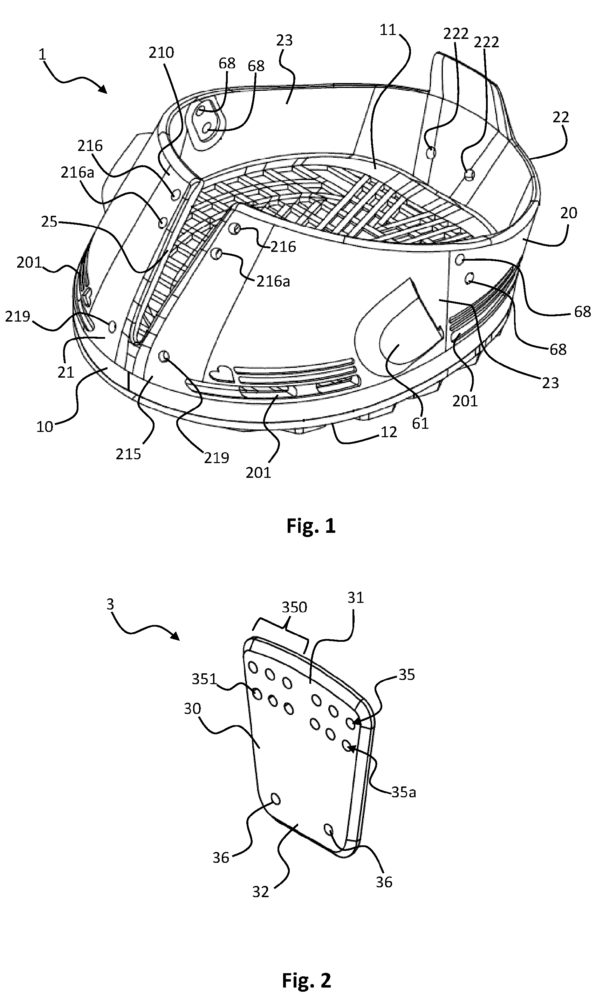

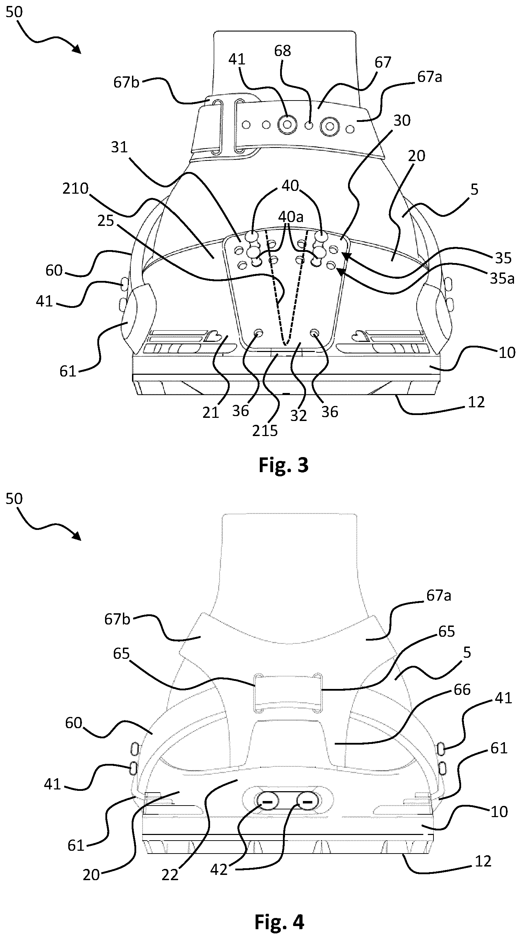

Figure 1 shows a shoe 1 for a hoof 5 (Fig. 3), wherein the shoe 1 comprises a sole 10 and a sidewall 20 around the perimeter of the sole 10 protruding upwards from a first side 11 of the sole 10. The sole 10 and the sidewall 20 are preferably integrated and formed as one single piece, as shown in the figures. The sole 10 and the sidewall 20 may also be formed as two separate pieces. The sole 10 may be of an elastic or flexible material. The sidewall 20 may be of an elastic or flexible material. In the application of the current invention, being shoes for a hoof of an animal, a material is considered elastic or flexible when the elongation at yield of that material is more than 5%. Below this threshold the material is considered hard, non-flexible, and non-elastic. An example of such hard material is steel. Examples of elastic materials may be thermoplastic polyurethane (TPU), thermoplastic rubber (TPR), or a mixture of such materials. The hardness of the material may typically be between 60 and 90 on the Shore A scale.

The sidewall 20 has a sidewall front section 21 and an opposing sidewall rear section 22, and two sidewall side sections 23 intermediate the sidewall front section 21 and the sidewall rear section 22.

The sidewall rear section 22 has two fastener-receiving holes 222 for receiving a fastener, such as a pin or a screw, for attaching a heel portion 66 to the sidewall rear section (will be discussed further in relation to Fig. 4).

The sidewall side sections 23 comprises a side strap housing 61 each. The side strap housing 61 may receive an end of a side strap 60 (see Fig. 3 to 7). Each sidewall side sections 23 further comprises two strap-fastener-receiving holes 68. The side strap 60 may be fastened to the sidewall 20 of the shoe 1 by inserting a fastener, such as a pin or a screw, within the strap-fastener-receiving holes 68 and corresponding strap-fastener-receiving holes on the side strap 60.

The sidewall 20 has several apertures 201 at its base, close to the first side 11 of the sole (Fig. 1). The apertures 201 may drain water collected inside the shoe 1 when in use.

A vertical slit 25 extends from an upper end 210 of the sidewall front section 21 towards a lower end 215 of the front section 21. The vertical slit 25 provides flexibility to the shoe 1. Firstly, the two parts of the sidewall front sections 21 on each side of the vertical slit 25 may be pulled away from each other so that the shoe 1 may easily be mounted on a hoof 5, or easily taken off a hoof 5. Furthermore, due to the vertical slit 25, the shoe 1 may fit different sized hoofs, and even hoofs that are non-symmetrical.

The sidewall front section 21 further comprises a pair of pin-receiving holes 216, and a pair of further pin-receiving holes 216a on the upper end 210 of the sidewall front section 21. The pin-receiving holes 216, 216a of each pair are horizontally spaced apart and positioned on each side of the vertical slit 25. The further pin-receiving holes 216a are vertically spaced apart from the pin-receiving holes 216. The pin-receiving holes 216, 216a may receive pins for fastening an adjustment device 3 to the shoe 1, as will be explained in detail further below.

In other examples (not shown) the sidewall front section 21 comprises a single pair of pin-receiving holes 216, wherein the pin-receiving holes 216 are horizontally spaced apart and positioned on each side of the vertical slit 25. In other examples (not shown) the sidewall front section 21 comprises more than two pairs of pin-receiving holes 216, wherein the pin-receiving holes 216 of each pair are horizontally spaced apart and positioned on each side of the vertical slit 25.

The sidewall front section 21 also comprises two fastener-receiving holes 219 at the lower end 215, horizontally spaced apart. These fastener-receiving holes 219 may receive fasteners such as pins or screws for fastening an adjustment device 3 to the shoe 1, as explained further below in relation to Fig. 3.

In figure 2 is shown an adjustment device for a shoe 1 for a hoof 5 (Fig. 3). The adjustment device 3 comprises a plate 30 having a plate upper end 31 and a plate lower end 32. The plate upper end 31 comprises a plurality 35 of pin-receiving holes 351, and a further plurality 35a of pin-receiving holes 351 being vertically spaced apart from each other. Each plurality 35, 35a of pin-receiving holes 351 comprises 6 pin-receiving holes 351 that are horizontally spaced apart from each other. In the examples shown in the figures, the pin-receiving holes 351 are not equally spaced apart in the horizontal direction, but rather in groups 350 of 3 pin-receiving holes 351 at each side of the plate. In other examples (not shown) the plate comprises only one plurality of pin-receiving holes, or more than two pluralities of pin-receiving holes. In other examples (not shown) the pin-receiving holes are equally distributed in the horizontal direction within a plurality of pin-receiving holes. In other examples (not shown) the one or more pluralities of pin-receiving holes comprises at least 3 pin-receiving holes. In other examples (not shown) the one or more pluralities of pin-receiving holes comprises 4, 5, 6 or more than 6 pin-receiving holes, horizontally spaced apart from each other. The pin-receiving holes 315 of the pluralities 35, 35a may receive pins for fastening the adjustment device 3 to the shoe 1, as will be explained in detail further below.

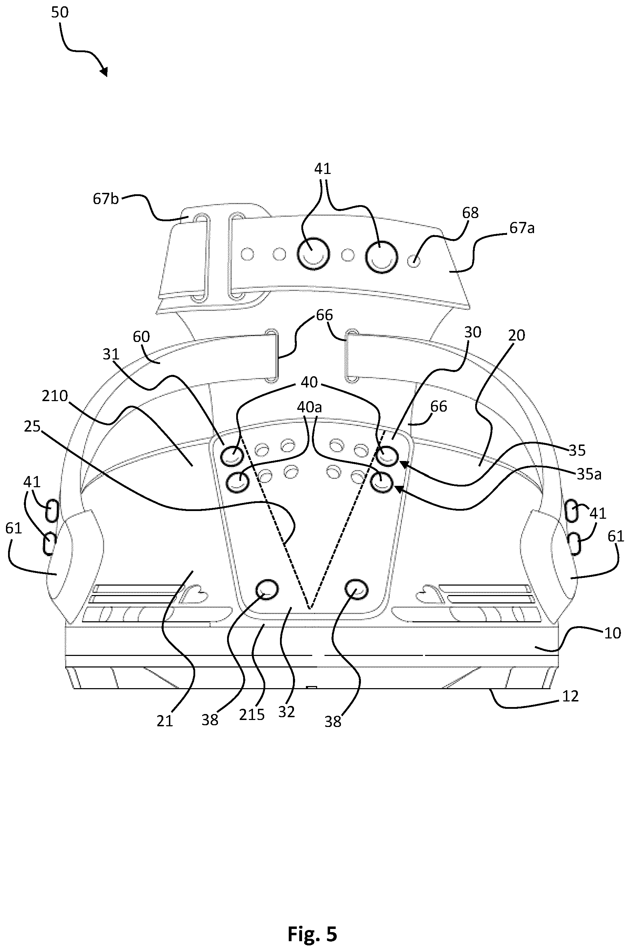

The plate lower end 32 also comprises two fastener-receiving holes 36 that are horizontally spaced apart. These fastener-receiving holes 36 may receive fasteners such as pins or screws for fastening the adjustment device 3 to the shoe 1, as explained further below in relation to Fig. 3 and 5.

The plate 30 may be of an elastic or flexible material. The plate 30 may preferably be of the same material as the shoe 1.

Figure 3 shown the adjustment device 3 attached to the shoe 1 to form an adjustable shoe 50 for a hoof 5. The plate 30 is placed on top of the vertical slit 25 (shown as dashed lines) of the sidewall front section 21 of the shoe 1, such that the pin-receiving holes 216, 216a of the shoe 1 align with the pluralities 35, 35a of pin-receiving holes 351 of the plate 30. Two pins 40 and two further pins 40a are provided within the pin-receiving holes 216, 216a of the shoe 1, and within four of the pin-receiving holes 351 of the pluralities 35, 35a of the plate 30.

The plate lower end 32 is fastened to the lower end of the front section 215 of the sidewall 20 by two fasteners 38 (Fig. 38) inserted through the corresponding fastener-receiving holes 36, 219 of the plate 30 and the shoe 1. The fastener may be pins or screws. In other examples (not shown) the plate lower end is fastened to the lower end of the front section by other fastening means such as glue. In other examples (not shown) the plate lower end is integral with the lower end of the front section.

The adjustable shoe 50 further comprises a side strap 60 fastened at each end to the sidewall side sections 23 of the shoe 1, by two strap fasteners 41 inserted through the strap-fastener-receiving holes 68 of the sidewall side sections 23 and through corresponding strap-fastener-receiving holes (not shown) of the side strap 60. The ends of the side strap 60 may be inserted into the side strap housings 61 to prevent the ends of the side strap 60 to move when the shoe 1 is in use. The side strap 60 is positioned around the heel-bulb of the foot in use, as shown in Fig. 4, showing the back of the adjustable shoe on a foot. With further reference to Fig. 4, the side strap 60 is threaded through two side strap openings 65 of a heel portion 66. The heel portion 66 is fastened to the sidewall rear side 22 of the shoe 1 by two heel-portion-fasteners 42 that are provided within the two corresponding heel-portion-fastener-receiving holes 222 of the sidewall rear side 22. The heel portion 66 and the side strap 60 may be of an elastic or flexible material. The heel portion 66 and/or the side strap 60 may preferably be of the same material as the shoe 1 and/or the plate 30.

In other examples (not shown) the sidewall rear portion extends further up, and the side strap may be threaded directly through openings in the sidewall rear portion.

The strap fasteners 41 fastening the side strap 60 to the sidewall side sections may be pins or screws. Each end of the side strap 60 comprises several strap-fastener-receiving holes along the length of the side strap 60 through which corresponding fasteners may be received. The tightness of the side strap 60 around the foot may thus be adjusted by selecting the appropriate strap-fastener-receiving holes on the side strap 60.

At an upper end of the heel portion 66, two opposing arms extend outwards to form a first and a second pastern strap 67a, 67b. The first and the second pastern strap may be wrapped around the pastern of a foot in use to secure the shoe to the foot. The first and second pastern strap 67a, 67b are fastened to each other on the front of the foot in a conventional manner, by for example inserting strap fasteners 41 within strap-fastener-receiving holes 68 on both pastern straps 67a, 67b. The first and second pastern strap 67a, 67b may be of an elastic or flexible material. The first and second pastern strap 67a, 67b may preferably be of the same material as the shoe 1 and/or the plate 30.

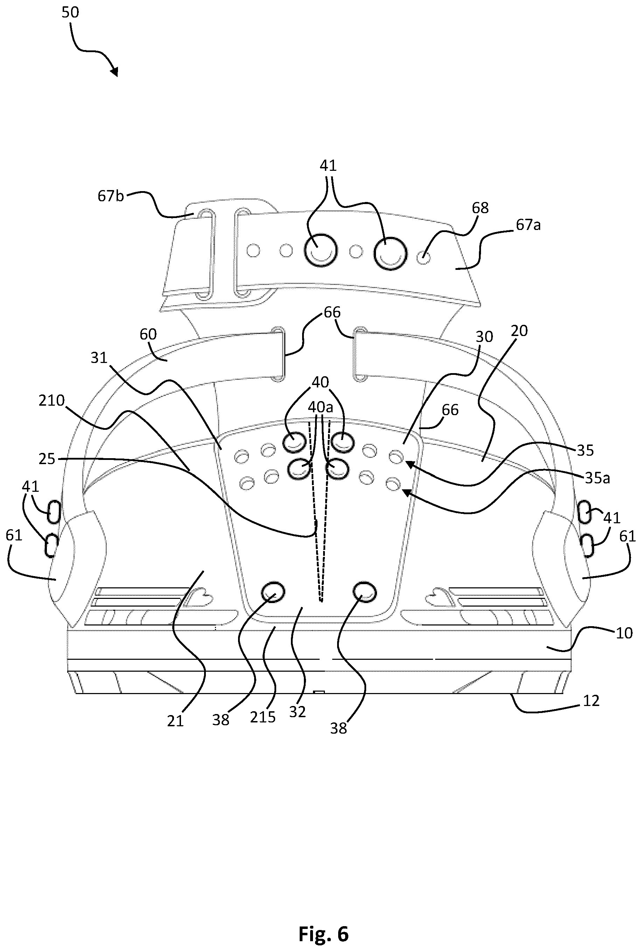

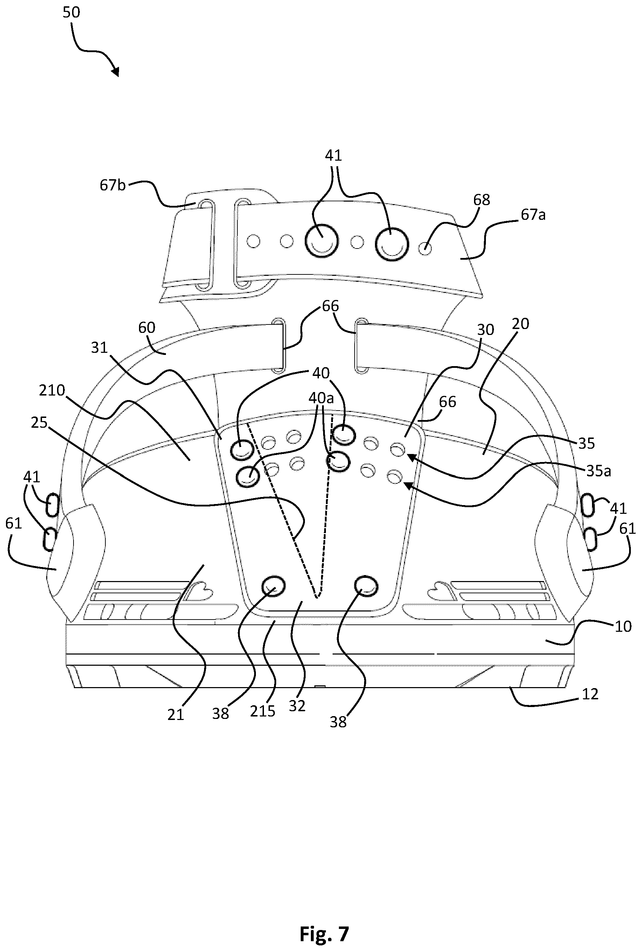

The choice of pin receiving hole 351 of the plate 30 sets the width of the sidewall front section 21. In Fig.3, the pins 40, 40a are provided within the intermediate pin-receiving hole 351 of each group 350 of 3 pin-receiving holes 351. To make the width of the sidewall front section 21 larger, to accommodate a larger hoof 5, the vertical slit 25 may be widened and the pins 40, 40a may be placed in the outermost pin-receiving holes 351 of the pluralities 35, 35a. This is illustrated in Fig. 5 where the vertical slit 25 (shown as dashed lines) is wide and the sidewall front section 21 is fastened with the pins 40, 40a to the outermost pin-receiving holes 351 of the plate 30. To make the width of the sidewall front section 21 smaller, to accommodate a smaller hoof 5, the vertical slit 25 may be made narrower and the pins 40, 40a may be placed in the innermost pin-receiving holes 351 of the pluralities 35, 35a, as shown in Fig.6. The adjustable shoe 50 may also be made smaller on one side of the sidewall front section 21, than on the other, by selecting different pin-receiving holes 315 on each side of the plate 30. This is illustrated in Fig 7 where the outermost pin-receiving hole 351 is used on the left side, and the innermost pin-receiving hole 351 is used on the right side, thus accommodating an asymmetrical hoof that is larger on the left side than on the right side.

In the example shown in the figures, the pluralities 35, 35a comprises 6 pin-receiving holes 351 divided into groups 350 of 3 pin-receiving holes 351. The invention will also work in other examples wherein the one or more pluralities 35, 35a comprises 4, 5 or more than 6 pin-receiving holes 351. More pin-receiving holes 351 of a plurality 35 results in more possible widths of the sidewall front section 21.

A person skilled in the art will understand that the figures are just principal drawings. The relative proportions of individual elements may also be distorted.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. Adjustment device (3) for a shoe (1) for a hoof (5), the adjustment device (3) comprising a plate (30) having a plate upper end (31) and a plate lower end (32), wherein the plate upper end (31) comprises a plurality (35) of at least three pin-receiving holes (351) for receiving complementary pins (40) of the shoe (1), the pin-receiving holes (351) of the plurality (35) of at least three pin receiving holes (351) being horizontally spaced apart from each other.

2. The adjustment device (3) according to claim 1, wherein the plate upper end (31) comprises a further plurality (35a) of pin-receiving holes (351) for receiving complementary pins (40) of the shoe (1), the pin-receiving holes (351) of the further plurality (35a) of pin-receiving holes (351) being horizontally spaced apart, and wherein the further plurality (35a) of pin-receiving holes (351) is vertically spaced apart from the plurality (35) of at least three pin-receiving holes (350).

3. The adjustment device (3) according to claim 1 or 2, wherein the plate lower end (32) is configured to be fastened to the shoe (1) in operational use.

4. The adjustment device (3) according to claim 3, wherein the plate lower end (32) comprises a fastener-receiving hole (36) for receiving complementary fastening means of the shoe (1).

5. The adjustment device (3) according to any one of the preceding claims, wherein the plate comprises rows of pin-receiving holes (351), the rows of pin-receiving holes (351) being distributed vertically between the plate upper end (31) and the plate lower end (32), and the pin-receiving holes (351) of each row being horizontally spaced apart.

6. A shoe (1) for a hoof (5), the shoe (1) comprising:
- a sole (10);
- a sidewall (20) around the perimeter of the sole (10) protruding upwards from a first side (11) of the sole (10), the sidewall (20) having a sidewall front section (21) and an opposing sidewall rear section (22);
- a vertical slit (25) extending from an upper end (210) of the sidewall front section towards a lower end (215) of the front section (21); and
- two pin-receiving holes (216) on the upper end (210) of the sidewall front section (21), wherein the two pin-receiving holes (216) are horizontally spaced apart and are positioned on each side of the vertical slit (25).

7. The shoe (1) according to claim 6, wherein the vertical slit (25) is wider at the upper end (210) of the sidewall front section (21) than at the lower end (215) of the front section (21).

8. The shoe (1) according to claim 6 or 7, the shoe (1) comprising two further pin-receiving holes (216a) on the upper end (210) of the sidewall front section (21), the two further pin-receiving holes (216a) being horizontally spaced apart and being positioned on each side of the vertical slit (25), vertically spaced apart from the two pin-receiving holes (216).

9. The shoe (1) according to any of the claims 6 to 8, wherein the lower end (215) of the sidewall front section (21) comprises a fastener-receiving hole (219) for receiving a fastening means, the fastening means being configured for engaging a fastener-receiving hole (36) of an adjustment device (3).

10. The shoe (1) according to any of the claims 6 to 9, wherein the shoe (1) comprises two columns of pin-receiving holes (216), the columns being horizontally spaced apart and positioned on each side of the vertical slit (25), and wherein the pin-receiving holes (216) of each column is vertically spaced apart along the vertical slit (25).

11. The shoe (1) according to any of the claims 6 to 10, wherein the sidewall front section (21) is inwardly inclined towards the opposing sidewall rear section (22).

12. An adjustable shoe (50) for a hoof (5), the adjustable shoe (50) comprising:
- an adjustment device (3) for a shoe (1) for a hoof (5), the adjustment device (3) comprising a plate (30) having a plate upper end (31) and a plate lower end (32), wherein the plate upper end (31) comprises a plurality (35) of pin-receiving holes (351) for receiving complementary pins (40) of the shoe (1), the pin-receiving holes (351) of the plurality (35) of pin-receiving holes (351) being horizontally spaced apart; and
- a shoe (1) for a hoof (5), the shoe (1) comprising:
- a sole (10);
- a sidewall (20) around the perimeter of the sole (10) protruding upwards from a first side (11) of the sole (10), the sidewall (20) having a sidewall front section (21) and an opposing sidewall rear section (22);
- a vertical slit (25) extending from an upper end (210) of the sidewall front section towards a lower end (215) of the front section (21); and
- two pin-receiving holes (216) on the upper end (210) of the sidewall front section (21), wherein the two pin-receiving holes (216) are horizontally spaced apart, and are positioned on each side of the vertical slit (25); wherein, the plate (30) is releasably attached to the sidewall front section (21) of the shoe (1) such that the two pin-receiving holes (216) of the shoe (1) align with the plurality (35) of pin-receiving holes (351) of the plate (30), and the adjustable shoe (50) comprises two pins (40) provided within the two pin-receiving holes (216) of the shoe (1), and within two of the pin-receiving holes (351) of the plurality (35) of the pin-receiving holes (351) of the plate (30).

13. The adjustable shoe according to claim 12, wherein:
- the plate (30) comprises rows of pin-receiving holes (351), the rows of pin-receiving holes (351) being distributed vertically between the plate upper end (31) and the plate lower end (32), and the pin-receiving holes (351) of each row being horizontally spaced apart; and
- the shoe (1) comprises two columns of pin-receiving holes (216), the columns being horizontally spaced apart, and positioned on each side of the vertical slit (25), and the pin-receiving holes (216) of each column is vertically spaced apart along the vertical slit (25),
- the adjustable shoe (50) comprises pins (40) provided within the pin-receiving holes (216) of the columns, and within corresponding pin-receiving holes (351) of the rows of pin-receiving holes (351), such that the plate is releasably attached to the sidewall front section (21) of the shoe (50).

14. An adjustable shoe (50) for a hoof (5), the adjustable shoe (50) comprising:
- an adjustment device (3) for a shoe (1) for a hoof (5), the adjustment device (3) comprising a plate (30) having a plate upper end (31) and a plate lower end (32), wherein the plate upper end (31) comprises a plurality (35) of pin-receiving holes (351) for receiving complementary pins (40) of the shoe (1), the pin-receiving holes (351) of the plurality (35) of pin-receiving holes (351) being horizontally spaced apart; and
- a shoe (1) for a hoof (5), the shoe (1) comprising:
- a sole (10);
- a sidewall (20) around the perimeter of the sole (10) protruding upwards from a first side (11) of the sole (10), the sidewall (20) having a sidewall front section (21) and an opposing sidewall rear section (22);
- a vertical slit (25) extending from an upper end (210) of the sidewall front section towards a lower end (215) of the front section (21); and
- two pin-receiving holes (216) on the upper end (210) of the sidewall front section (21), wherein the two pin-receiving holes (216) are horizontally spaced apart, and are positioned on each side of the vertical slit (25);
wherein, the plate lower end (32) is fastened to the lower end (215) of the sidewall front section (21) of the shoe (1) such that the two pin-receiving holes (216) of the shoe (1) align with the plurality (35) of pin-receiving holes (351) of the plate (30), and the adjustable shoe (50) comprises two pins (40) provided within the two pin-receiving holes (216) of the shoe (1), and within two of the pin-receiving holes (351) of the plurality (35) of pin-receiving holes (351) of the plate (30).

15. The adjustable shoe (50) according to claim 14, wherein the plate upper end (31) comprises a further plurality (35a) of pin-receiving holes (351), the pin-receiving holes (351) of the further plurality (35a) of pin-receiving holes (351) being horizontally spaced apart, and wherein the further plurality (35a) of pin-receiving holes (351) is vertically spaced apart from the plurality (35) of pin-receiving holes (351), and wherein the shoe (1) comprising two further pin-receiving holes (216a) on the upper end (210) of the sidewall front section (21), the two further pin-receiving holes (216a) being horizontally spaced apart, and being positioned on each side of the vertical slit (25), vertically spaced apart from the two pin-receiving holes (216), and wherein the adjustable shoe (50) further comprises two further pins (40a) provided within the two further pin-receiving holes (216) of the shoe (1), and within two of the pin-receiving holes (351) of the further plurality (35a) of pin-receiving holes (351) of the plate (30).

16. The adjustable shoe (50) according to claim 14 or 15, wherein the plate lower end (32) is fastened to the lower end (215) of the sidewall front section (21) by being integrated with the lower end (215) of the sidewall front section (21).

17. The adjustable shoe (50) according to claims 14 or 15, wherein the plate lower end (32) comprises a fastener-receiving hole (36), and the lower end (215) of the sidewall front section (21) of the shoe (1) comprises a fastener-receiving hole (219), and wherein the adjustable shoe (50) further comprises a fastener provided within both the fastener-receiving hole (36) of the plate (36) and the fastener-receiving hole (219) of the shoe (1) for fastening the lower end (32) of the plate (30) to the lower end (215) of the sidewall front section (21) of the shoe (1).

18. The adjustment shoe (50) according to any one of claims 12 to 17, wherein the shoe (1) further comprises a pastern strap (67) in connection with the sidewall rear section (22) of the shoe (1).
